Europäisches Patentamt

(19) European Patent Office

Office européen des brevets

(11) Numéro de publication: **0 275 786**
**B1**

(12) **FASCICULE DE BREVET EUROPEEN**

(45) Date de publication du fascicule du brevet:
**12.07.89**

(21) Numéro de dépôt: **87402973.9**

(22) Date de dépôt: **23.12.87**

(51) Int. Cl.⁴: **B60T 17/18**, B60T 11/32,
B60T 13/14, B60T 13/68,
B64C 25/44

(54) **Circuit de freinage pour avion.**

(30) Priorité: **26.12.86 FR 8618197**

(43) Date de publication de la demande:
**27.07.88 Bulletin 88/30**

(45) Mention de la délivrance du brevet:
**12.07.89 Bulletin 89/28**

(84) Etats contractants désignés:
**GB SE**

(56) Documents cités:
**DE-A- 3 027 745**
**US-A- 3 481 358**
**US-A- 4 264 109**
**US-A- 4 307 916**

(73) Titulaire: **MESSIER-HISPANO-BUGATTI, 5 rue Louis Lejeune, F-92120 Montrouge(FR)**

(72) Inventeur: **Guichard, Jean, 15 rue Louis Blanc, F-92250 La Garenne Colombes(FR)**
Inventeur: **Favre, Christian, 2 square Roger Salengro, F-91300 Massy(FR)**

(74) Mandataire: **Fruchard, Guy et al, CABINET BOETTCHER 23, rue la Boétie, F-75008 Paris(FR)**

## Description

La présente invention concerne un circuit de freinage pour avion.

Il est connu que les circuits de freinage pour avion comportent généralement des freins de roues alimentés en fluide hydraulique par des servovalves montées dans un circuit normal et un circuit de secours, le circuit normal et le circuit de secours pouvant être sélectivement reliés aux reins de roues par des moyens de commutation et protégés contre une perte excessive de fluide hydraulique par des fusibles hydrauliques. Ces circuits sont généralement très complexes et comportent des composants dont la qualité doit être très élevée pour assurer une bonne sécurité de fonctionnement, ce qui implique un coût élevé des circuits.

Un but de la présente invention est de proposer un circuit de freinage de coût réduit tout en garantissant une sécurité de fonctionnement suffisante.

En vue de la réalisation de ce but, on prévoit selon l'invention un circuit de freinage pour avion du type décrit ci-dessus dans lequel les servovalves du circuit normal sont associées par paires, les fusibles hydrauliques du circuit normal sont disposés en amont des servovalves sur un tronçon de ligne commun à chaque paire de servovalves et les moyens de commutation du circuit normal au circuit de secours sont disposés en aval des servovalves. Ainsi, on réduit le nombre de fusibles hydrauliques et les canalisations correspondantes tout en limitant de nombre de freins qui sont affectés par la fermeture d'un fusible hydraulique. De plus, en disposant les moyens de commutation en aval des servovalves, on s'assure la possibilité de mise en service du circuit de secours de façon ponctuelle sur un tronçon de ligne lors de la défaillance d'une seule servovalve du circuit normal.

Selon une version avantageuse de l'invention, chaque servovalve du circuit normal est associée à un frein de roue. Ainsi, on réduit au strict minimum les effets sur le freinage de la défaillance d'une servovalve du circuit normal.

Selon un autre aspect avantageux de l'invention, chaque servovalve du circuit de secours est associée à deux moyens de commutation. Ainsi, tout en garantissant une possibilité de raccordement de chaque frein de roues au circuit de secours, on minimise le coût de celui-ci en réduisant le nombre de servovalves.

Selon un mode de réalisation préféré de l'invention, les fusibles hydrauliques du circuit de secours sont disposés entre les servovalves et les moyens de commutation. Ainsi, de même que dans le circuit normal on diminue le nombre de fusibles hydrauliques sans affecter un trop grand nombre de freins de roues par la fermeture de l'un des fusibles hydrauliques.

Selon un aspect préféré de l'invention, les servovalves sont asservies par des capteurs de pression disposés en aval des moyens de commutation. Ainsi, certains des capteurs de pression servent à asservir à la fois les servovalves du circuit normal et les servovalves du circuit de secours.

Selon encore un aspect préféré de l'invention, chaque paire de servovalves associées est montée sur une plaque de base indépendante. Ainsi, l'apparition d'une crique sur une plaque de base affecte une partie restreinte du circuit de freinage.

Selon encore un aspect préféré de l'invention, le circuit normal et le circuit de secours sont chacun reliés à une source de fluide par une ligne sur laquelle est montée une électrovanne dont l'ouverture est commandée en tenant compte de signaux résultant d'un capteur de pression disposé en aval de l'électrovanne du circuit normal Ainsi, on assure une indépendance totale du circuit normal et du circuit de secours jusqu'aux moyens de commutation disposés en aval des servovalves du circuit normal et du circuit de secours.

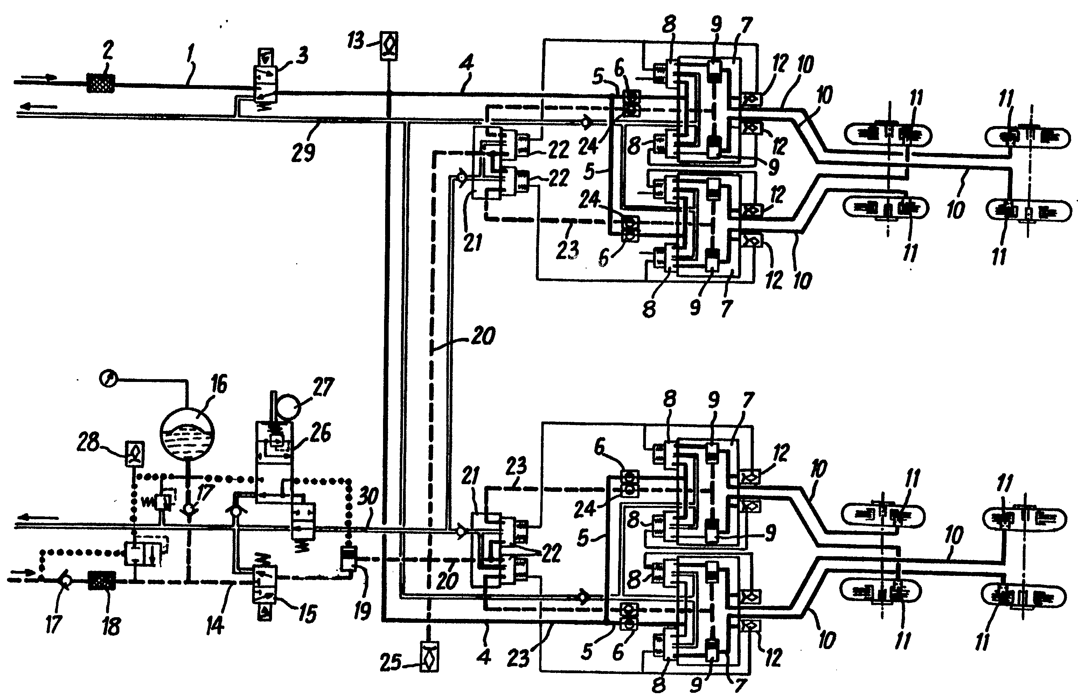

D'autres caractéristiques et avantages de l'invention apparaîtront à la lecture de la description qui suit d'un mode de réalisation particulier mais non limitatif de l'invention en référence à la figure unique ci-jointe qui représente un diagramme schématique d'un circuit de freinage selon l'invention.

En référence à la figure, le circuit de freinage comporte un circuit normal dont les canalisations aller sont représentées en traits continus épais et un circuit de secours dont les canalisaitons aller sont représentées en pointillés épais, les canalisations de retour des deux circuits étant représentées en doubles traits fins.

Le circuit normal comporte un tronçon de canalisation d'alimentation 1 sur lequel est monté un filtre 2 et une électrovanne normale 3. Au-delà de l'électrovanne normale 3, le tronçon d'alimentation 1 se subdivise en deux tronçons de ligne 4 qui servent chacun à alimenter un train d'atterrissage. Chaque tronçon de ligne 4 se subdivise à son tour en deux tronçons de ligne 5 sur lesquels sont disposés des fusibles hydrauliques 6. On rappelle que les fusibles hydrauliques sont des vannes qui sont normalement maintenues ouvertes et qui se ferment pour éviter une perte de fluide hydraulique trop importante lorsqu'une rupture de canalisation en aval du fusible hydraulique provoque une perte de charge dépassant un seuil prédéterminé.

En aval des fusibles hydrauliques 6, chaque tronçon de circuit 5 est relié à une plaque de base 7 supportant une paire de servovalves 8 ayant chacune une entrée reliée au tronçon de ligne 5 et une sortie reliée un clapet navette 9 également monté sur la plaque de base 7. En aval du clapet navette 9, le circuit comporte un tronçon de ligne 10 acheminant le fluide hydraulique à un frein de roues 11 et sur lequel est monté un capteur de pression 12 dont la sortie est reliée à une entrée d'asservissement d'une servovalve 8, chaque servovalve 8 étant par ailleurs reliée de façon non représentée à une unité de traitement envoyant une consigne d'ouverture en fonction du freinage souhaité.

Au niveau de la jonction entre les tronçons de ligne 4, le circuit normal comporte un capteur de pression 13 relié à l'unité de traitement afin de déclencher l'utilisation du circuit de secours lorsque la pression au niveau du capteur 13 chute en dessous d'un seuil donné alors que l'électrovanne 3 est ouverte.

Le circuit de secours comporte un tronçon de ligne d'alimentation 14 sur lequel est montée une électrovanne 15 reliée à l'unité de traitement. La ligne d'alimentation 14 est également reliée à un accumulateur hydraulique 16 servant à alimenter le circuit de freinage de parking illustré par un trait pointillé. L'accumulateur hydraulique 16 est convenablement isolé du tronçon de ligne 14 par des clapets anti-retour 17. Un filtre 18 est disposé sur le tronçon d'alimentation 14. En aval de l'électrovanne 15, le circuit de secours comporte un clapet navette 19 servant à la commutation du circuit de secours sur le circuit de parking.

En aval du clapet navette 19, le circuit de secours se divise en deux tronçons 20 alimentant chacun une plaque de base 21 sur laquelle sont montées deux servovalves 22 ayant chacune une sortie de fluide hydraulique reliée par un tronçon de ligne 23 à une seconde entrée des clapets navette 9 par l'intermédiaire de fusibles hydrauliques 24. Ainsi, chaque servovalve du circuit de secours est associée à deux moyens de commutation 9 du circuit normal au circuit de secours.

Le circuit de secours comporte un capteur de pression 25 disposé en aval de l'électrovanne 15, par exemple au niveau de la liaison entre les tronçons de ligne 20 et servant déclencher une alarme lorsque la pression est insuffisante dans le circuit de secours en dépit de l'ouverture de l'électrovanne 15. Les servovalves 22 ont chacune une entrée d'asservissement reliée à un capteur de pression 12 en parallèle avec une servovalve 8 du circuit normal.

Le circuit de freinage de parking comporte un distributeur 26 dont la tige est entraînée par un moteur 27 lui-même relié à l'unité de traitement. Un capteur de pression 28 est monté dans le circuit de freinage parking pour déclencher une alarme lors d'une baisse de pression trop importante.

Le retour à la bâche de réserve de fluide hydraulique est assuré sur le circuit normal par un réseau de lignes 29 et sur le circuit de secours par un réseau de lignes 30.

Bien entendu l'invention n'est pas limitée au mode de réalisation décrit. En particulier, bien que selon le mode de réalisation préféré décrit on prévoit sur le circuit de secours une seule servovalve pour une paire de roues, on peut adopter sur le circuit de secours une disposition analogue à celle du circuit normal comportant une servovalve par roue.

## Revendications

1. Circuit de freinage pour avion comprenant des freins de roues (11) alimentés en fluide hydraulique par des servovalves (8, 22) montées dans un circuit normal et un circuit de secours, le circuit normal et le circuit de secours étant sélectivement reliés aux freins de roues par des moyens de commutation (9) et protégés contre une perte excessive de fluide hydraulique par des fusibles hydrauliques (6,24) caractérisé en ce que les servovalves (8) du circuit normal sont associées par paires, en ce que les fusibles hydrauliques (6) du circuit normal sont disposés en amont des servovalves (8) sur un tronçon de ligne (5) commun à chaque paire de servovalves, et en ce que les moyens de commutation (9) du circuit normal au circuit de secours sont disposés en aval des servovalves (8).

2. Circuit de freinage selon la revendication 1 caractérisé en ce que chaque servovalve (8) du circuit normal est associée à un frein de roue (11).

3. Circuit de freinage selon la revendication 1 ou la revendication 2 caractérisé en ce que chaque servovalve (22) du circuit de secours est associée à deux moyens de commutation (9).

4. Circuit de freinage selon la revendication 3 caractérisé en ce que les fusibles hydrauliques (24) du circuit de secours sont disposés entre les servovalves (22) et les moyens de commutation (9).

5. Circuit de freinage selon l'une des revendications 1 à 4 caractérisé en ce que les servovalves (8,22) sont asservies par des capteurs de pression (12) disposés en aval des moyens de commutation (9).

6. Circuit de freinage selon l'une des revendications 2 à 5 caractérisé en ce que chaque paire de servovalves associées est montée sur une plaque de base (7,21).

7. Circuit de freinage selon l'une des revendications 1 à 6 caractérisé en ce que le circuit normal et le circuit de secours sont chacun reliés à une source de fluide par une ligne sur laquelle est montée une électrovanne (3,15) dont l'ouverture est commandée en tenant compte de signaux résultant d'un capteur de pression (13) disposé en aval de l'électrovanne (3) du circuit normal.

## Claims

1. A hydraulic circuit for aircraft braking, comprising: wheel brakes (11) fed with hydraulic fluid by servovalves (8, 22) mounted in a normal circuit and in an emergency circuit and the emergency circuit being selectively connectable to the wheel brakes by swiching means (9) and being protected from excessive loss of hydraulic fluid by hycraulic fuses (6, 24) wherein the servovalves (8) of the normal circuit are associated in pairs, the hydraulic fuses (6) of the normal circuit are disposed upstream from the servovalves (8) on a length of line which is common to each pair of servovalves, and said switching means (9) for switching from the normal circuit to the emergency circuit are disposed downstream from the servovalves (8).

2. A braking circuit according to claim 1, wherein each servovalve (8) of the normal circuit is associated with one wheel brake (11).

3. A braking circuit according to claim 1 or claim 2, wherein each servovalve (22) of the emergency circuit is associated with two switching means (9).

4. A braking circuit according to claim 3, wherein the hydraulic fuses (24) of the emergency circuit are disposed between the servovalves (22) and the switching means (9).

5. A braking circuit according to claim 1, wherein the servovalves (8, 22) are controlled by pressure sensors (12) disposed downstream from the switching means (9).

6. A braking circuit according to one of claims 2 to 5, wherein each pair of associated servovalves is mounted on a base plate (7, 21).

7. A braking circuit according to one of claims 1 to 6, wherein the normal circuit and the emergency circuit are each connected to a fluid source via a respective line including an electrically controlled valve (3, 15) which is opened as a function of signals coming from a pressure sensor (13) disposed downstream from the electrically controlled valve (3) of the normal circuit.

## Patentansprüche

1. Bremskreis für Flugzeuge, mit Radbremsen (11), die mit einem hydraulischen Fluid durch Servoventile (8, 22) versorgt werden, welche in einen normalen Kreis und in einen Reservekreis eingebaut sind, wobei die Kreise einzeln mit den Radbremsen durch Umschaltmittel (9) verbunden und gegen einen übermässigen Verlust an hydraulischem Fluid durch hydraulische Sicherungen (6, 24) geschützt sind, dadurch gekennzeichnet, dass die Ventile (8) des normalen Kreises paarweise zusammengefasst sind; dass die hydraulischen Sicherungen (6) des normalen Kreises stromaufwärts der Servoventile (8) in einem jedem Servoventilpaar gemeinsamen Leitungsabschnitt (5) angeordnet sind; und daß die Mittel (9) zur Umschaltung des normalen Kreises auf den Reservekreis stromabwärts der Servoventile (8) angeordnet sind.

2. Bremskreis nach Anspruch 1, dadurch gekennzeichnet, daß jedes Servoventil (8) des normalen Kreises einer Radbremse (11) zugeordnet ist.

3. Bremskreis nach den Ansprüchen 1 oder 2, dadurch gekennzeichnet, daß jedes Servoventil (22) des Reservekreises zwei Umschaltmitteln (9) zugeordnet ist.

4. Bremskreis nach Anspruch 3, dadurch gekennzeichnet, daß die hydraulischen Sicherungen (24) des Reservekreises zwischen den Servoventilen (22) und den Umschaltmitteln (9) angeordnet sind.

5. Bremskreis nach einem der Ansprüche 1 bis 4, dadurch gekennzeichnet, daß die Servoventile (8, 22) von Drucksonden (12) gesteuert werden, die stromabwärts der Umschaltmittel (9) angeordnet sind.

6. Bremskreis nach einem der Ansprüche 2 bis 5, dadurch gekennzeichnet, daß jedes zugeordnete Servoventilpaar auf einer Grundplatte (7, 21) montiert ist.

7. Bremskreis nach einem der Ansprüche 1 bis 6, dadurch gekennzeichnet, daß der normale Kreis und der Reservekreis jeweils über eine Leitung mit einer Fluidquelle verbunden sind und in die Leitung ein Elektroventil (3, 15) eingebaut ist, dessen Öffnung in Abhängigkeit von den Ausgangssignalen einer Drucksonde (13) gesteuert wird, die stromabwärts des Elektroventils (3) des normalen Kreises angeordnet ist.